# FASCICULE DE BREVET EUROPEEN

(11) **EP 3 771 546 B1**
(45) Date de publication et mention de la délivrance du brevet: **07.09.2022**
(21) Numéro de dépôt: 20186537.5
(22) Date de dépôt: 17.07.2020
(51) Int. Cl.: B29C 63/00, B29C 63/16, B29C 63/22, B29L 31/00, B29C 63/48

(54) **DISPOSITIF DE GAINAGE D'UNE ENVELOPPE SUR UNE STRUCTURE CREUSE ET PROCEDE ASSOCIE**
VORRICHTUNG ZUR UMMANTELUNG EINER HÜLLE AUF EINER HOHLSTRUKTUR, UND ENTSPRECHENDES VERFAHREN
DEVICE FOR CLADDING A CASING ON A HOLLOW STRUCTURE AND ASSOCIATED METHOD

(30) Priorité: 01.08.2019 FR 1908858
(43) Date de publication de la demande: 03.02.2021
(73) Titulaire: Emerging Industry, 51490 Epoye (FR)
(72) Inventeur: PATTE, Damien, 51490 Époye (FR)
(74) Mandataire: Cabinet Chaillot

(56) Documents cités:
- EP-A2- 2 324 991
- FR-A1- 3 055 830
- US-A1- 2015 352 822

## Description

La présente invention concerne le domaine de la confection et porte plus particulièrement sur un dispositif de gainage d'une enveloppe sur une structure creuse et un procédé associé, notamment dans le domaine de la bagagerie.

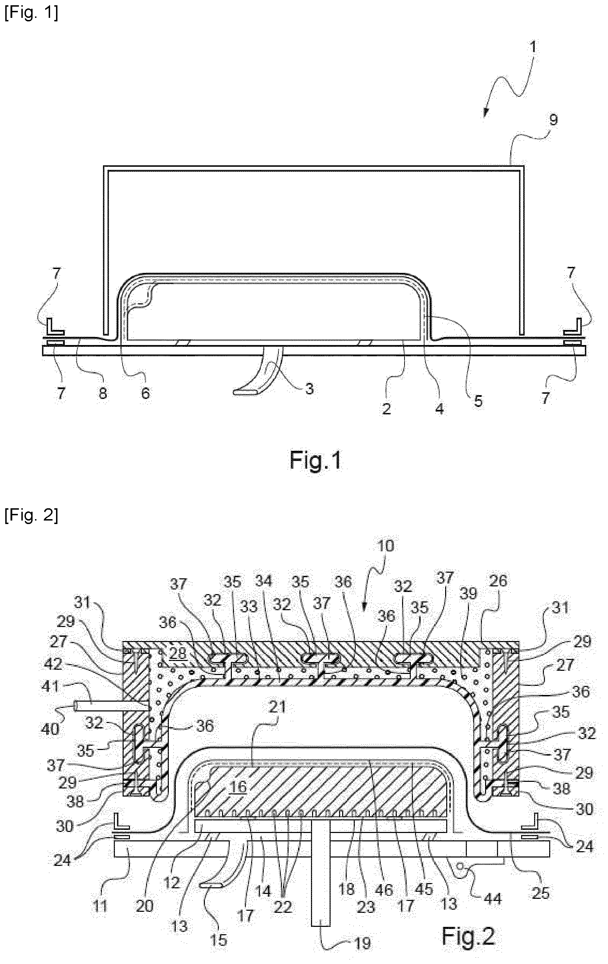

Un dispositif de gainage d'une enveloppe sur une structure creuse (notamment un bagage) tel que celui représenté sur la Figure 1 avec son procédé associé sont connus. Le dispositif 1 comprend un conformateur mâle 2 équipé d'un circuit d'aspiration 3, le conformateur mâle 2 étant destiné à recevoir sur l'ensemble de sa surface une structure de bagage 4. Cette structure de bagage 4 est au préalable recouverte d'un adhésif 5 thermoréactivable et/ou thermo-réticulable n'ayant pas de tack au toucher avant cette réactivation thermique. La structure de bagage 4 est positionnée sur le conformateur 2 et reçoit par chaussage manuel une enveloppe confectionnée 6 recouvrant tout ou partie de la structure 4. Un cadre 7 insérant une membrane 8 fine, résistante et élastique est alors positionné de telle sorte que la membrane 8 soit placée de façon étanche au-dessus de l'ensemble conformateur 2 - structure 4 -enveloppe 6. Un flux de vide passant par des aménagements du conformateur 2 aspire la membrane 8 qui vient plaquer l'ensemble de l'enveloppe 6 sur la structure 4, elle-même plaquée sur le conformateur 2. L'ensemble est alors placé dans un four 9 pour réactiver l'adhésif à environ 60 °C. Le vide est coupé, le cadre 7 à membrane 8 ouvert et l'ensemble cohérent structure 7-enveloppe 6 démoulé. Toutefois, cette technologie présente un certain nombre d'inconvénients et de limites. Par exemple, le flux de vide permet d'atteindre une pression au cm² de l'ordre de 1 bar maximum, ce qui n'est pas suffisant pour certains cas de figure pour assurer un plaquage et une déformation élastique de l'enveloppe si nécessaire. Egalement, le flux de vide génère aussi, comme tout gaz qui se détend, un refroidissement local généralement situé au droit de son passage et sur une hauteur d'environ 20 mm. Ce « courant froid » va a contrario des calories à apporter pour déclencher la réticulation ou la thermoréactivation des adhésifs employés. Par ailleurs, et du fait de cette contrariété froid/calories, les temps de cycle sont plus longs. Il est aussi à noter que pour que le flux de vide soit constant, il faut faire en sorte que jamais la membrane n'obstrue la source de vide. Par ailleurs, il est possible que subsistent avec cette technique connue des « bulles » d'air entre la structure et l'enveloppe, que le flux de vide n'arrive pas à résorber, et qui entraînent des défauts irréparables non souhaités.

Il existe donc un besoin pour un dispositif et un procédé associé qui permettent à la fois à l'enveloppe et à la structure de bagage de se conformer parfaitement au conformateur et qui permettent l'adhésion de l'enveloppe à la structure de bagage, tout en garantissant un plaquage total de l'enveloppe sur la structure de bagage. Le document FR 3 055 830 A1 divulgue un dispositif de gainage d'une enveloppe sur une face dite de gainage d'une structure creuse , le dispositif de gainage (comprenant :un conformateur ayant une face externe configurée pour épouser tout ou partie de la forme de la face de la structure creuse opposée à la face de gainage et une face interne, la surface du conformateur étant configurée pour permettre une circulation d'air entre ses faces externe et interne ;un premier mécanisme d'aspiration pour aspirer de l'air depuis la face interne du conformateur ; et un cadre entourant au moins partiellement le conformateur et configuré pour maintenir une membrane élastique sur la face externe du conformateur afin, en utilisation, de prendre en sandwich entre la face externe du conformateur et la membrane élastique la structure creuse et l'enveloppe et en figer la position.

Le Demandeur se propose donc de répondre à ces besoins par l'emploi d'une baudruche pressée contre l'ensemble enveloppe-structure creuse de bagage, sous l'effet d'un fluide mis sous pression pour assurer la conformation de l'ensemble aux reliefs de la structure et du conformateur, et thermorégulé par celui-ci pour faire adhérer l'enveloppe à la structure creuse de bagage, et facultativement par l'emploi de moyens d'aspiration auxiliaires, par exemple de type Venturi, configurés pour réaliser une aspiration totale de l'air présent à l'interface enveloppe-structure creuse de bagage et permettre le positionnement de l'enveloppe sur la structure creuse avant de rabattre le cadre à vide qui en fige la position.

La présente invention a donc pour objet un dispositif de gainage d'une enveloppe sur une face dite de gainage d'une structure creuse, le dispositif de gainage comprenant :
un conformateur ayant une face externe configurée pour épouser tout ou partie de la forme de la face de la structure creuse opposée à la face de gainage et une face interne, la surface du conformateur étant configurée pour permettre une circulation d'air entre ses faces externe et interne ;
un premier mécanisme d'aspiration pour aspirer de l'air depuis la face interne du conformateur ; et
un cadre entourant au moins partiellement le conformateur et configuré pour maintenir une membrane élastique sur la face externe du conformateur afin, en utilisation, de prendre en sandwich entre la face externe du conformateur et la membrane élastique la structure creuse et l'enveloppe et en figer la position,
caractérisé par le fait que le dispositif de gainage comprend en outre :
un caisson portant une baudruche étanche disposée en regard du conformateur,
un système d'injection étanche de fluide sous pression et thermorégulé entre le caisson et la baudruche,
le caisson étant mobile entre une position écartée du conformateur permettant d'installer la structure creuse, l'enveloppe et la membrane élastique sur le conformateur et une position de travail dans laquelle la baudruche, sous l'effet du fluide sous pression, épouse la forme de la face externe du conformateur et de la structure dans ses différents détails de géométrie et applique une pression sur la surface de la membrane élastique pour plaquer l'enveloppe sur la face de gainage de la structure creuse et en figer la position. Le premier mécanisme d'aspiration peut notamment être un mécanisme de type ventilateur ou pompe à vide.

Pour l'application d'une pression uniforme par la membrane élastique, le cadre maintient de préférence la membrane sur toute sa périphérie.

Une fois le fluide mis sous pression, la baudruche est gonflée et est configurée pour permettre à un ensemble enveloppe-structure creuse à solidariser et conformer, d'épouser uniformément et de façon certaine tous les reliefs du conformateur et de la structure.

La baudruche aura, de préférence, une épaisseur suffisante pour offrir une bonne résistance aux contraintes thermiques et de pression du fluide injecté, et aura, de préférence, une inertie thermique adaptée aux transferts caloriques. Selon un mode de réalisation de la présente invention, le dispositif de gainage comprend un second mécanisme d'aspiration, de préférence de type Venturi. Ce second mécanisme d'aspiration est alors configuré pour aspirer totalement l'air à l'interface entre l'enveloppe et la structure creuse, permettant aussi à l'opérateur de pré-positionner l'enveloppe sur la structure creuse, de la solidariser et conformer, et empêcher la formation de bulles d'air avant de figer celle-ci par le rabattement de la bâche à vide avant la descente de la baudruche.

Selon un mode de réalisation de la présente invention, le fluide est de l'eau ou une huile.

Selon un mode de réalisation de la présente invention, la baudruche est réalisée en un matériau de type élastomère dont le coefficient de Poisson est au moins égal à 0,5.

Ceci permet de restituer la pression appliquée malgré la déformation élastique de la baudruche.

Selon un mode de réalisation de la présente invention, au moins l'un parmi des trous et des rainures sont formés sur la surface du conformateur. Ces trous et/ou rainures permettent une circulation de l'air aspiré par les premier et deuxième mécanismes d'aspiration.

Selon un mode de réalisation de la présente invention, des saillies sont formées d'un seul tenant sur la surface de la baudruche destinée à être en contact avec le caisson, lesdites saillies étant configurées pour être insérées dans le caisson et étant aptes à maintenir la baudruche attachée au caisson. Ces saillies pourront notamment avoir une forme de T, la traverse du T étant fixée dans une cavité de forme complémentaire formée dans le caisson, pour offrir à la fois une facilité de pose et de changement de la baudruche, et une excellente résistance au poids de la baudruche. Les saillies en forme de T moulées en même temps que la baudruche lors de sa réalisation permettent d'éviter que la masse du fluide circulant en permanence dans le caisson ne déforme la peau extérieure de la baudruche et génère lors de la fermeture du caisson sur le conformateur des contraintes pouvant déplacer l'enveloppe en regard du conformateur et de ce fait générer des défauts irréversibles sur l'aspect du bagage.

En outre, grâce aux éléments de maintien, lorsque le caisson est relevé, la baudruche ne reste pas collée sur la membrane.

Selon un mode de réalisation de la présente invention, le dispositif de gainage comprend un clapet de décharge permettant de couper la mise en dépression de la membrane.

La présente invention a également pour objet un procédé de gainage utilisant un dispositif de gainage tel que défini ci-dessus, caractérisé par le fait que le procédé comprend les étapes suivantes consistant à :
disposer une structure creuse à gainer sur la face externe du conformateur, la face de gainage de la structure creuse ayant été préalablement enduite d'au moins l'un d'un adhésif thermoréactivable et d'un adhésif thermo-réticulable ;
disposer une enveloppe confectionnée sur la structure creuse, l'enveloppe s'étendant au-delà de la structure creuse ;
réaliser une première aspiration entre l'enveloppe et la structure de sorte à parfaire le positionnement de l'enveloppe sur la structure par le premier mécanisme d'aspiration ;
disposer une membrane élastique au-dessus de l'enveloppe, la membrane étant maintenue par le cadre ;
réaliser une aspiration par le deuxième mécanisme d'aspiration de façon à appliquer la membrane sur l'enveloppe, la structure creuse et le conformateur ;
abaisser le caisson en direction du conformateur ;
verrouiller le caisson en position sur le conformateur ;
injecter un fluide sous pression et thermorégulé entre le caisson et la baudruche ;
arrêter l'aspiration et remettre en pression ;
maintenir l'injection de fluide sous pression ;
injecter un fluide sous pression refroidi ;
maintenir l'injection de fluide sous pression refroidi ;
diminuer l'injection de fluide sous pression refroidi ;
remettre l'aspiration du deuxième mécanisme d'aspiration ;
déverrouiller le caisson ;
relever le caisson ;
couper l'aspiration et relever le cadre comportant la membrane ; et
extraire l'ensemble enveloppe -structure creuse conformé.

Selon un mode de réalisation particulier de la présente invention, le procédé comprend une étape consistant à réaliser une aspiration par le deuxième mécanisme d'aspiration de façon à appliquer l'enveloppe sur la structure creuse.

Selon un mode de réalisation particulier de la présente invention, le procédé comprend au moins une étape de remise en pression au moyen d'un clapet de décharge.

Selon un mode de réalisation particulier de la présente invention, la structure creuse est préalablement encollée.

Selon un mode de réalisation particulier de la présente invention, l'excédent d'enveloppe de l'ensemble enveloppe-structure creuse conformé est retiré lors d'une étape ultérieure de découpe et/ou rembordement.

La présente invention trouve notamment une application particulière dans le domaine de la bagagerie, dans lequel une structure creuse de bagage doit être recouverte d'une enveloppe confectionnée.

Pour mieux illustrer l'objet de la présente invention, on va en décrire ci-après, à titre indicatif et non limitatif, un mode de réalisation avec référence aux dessins annexés.

Sur ces dessins :
[Fig. 1] est une vue en coupe transversale d'un dispositif de gainage selon l'état antérieur de la technique ;
[Fig. 2] est une vue en coupe transversale d'un dispositif de gainage selon la présente invention, à un premier état ; et
[Fig. 3] est une vue en coupe transversale du dispositif de de la Figure 2, à un second état.

Sur la Figure 2, on peut voir que l'on a représenté un dispositif de gainage 10 selon la présente invention. Le dispositif de gainage 10 comporte un support inférieur 11 et un support supérieur 12 disposé au-dessus du support inférieur 11. Des espaceurs 13 sont disposés entre le support inférieur 11 et le support supérieur 12 de façon à constituer un espace 14 entre le support inférieur 11 et le support supérieur 12. Un mécanisme d'aspiration 15 est raccordé à l'espace 14 entre le support inférieur 11 et le support supérieur 12. Un tel mécanisme d'aspiration 15, bien connu de l'homme du métier, comprend une pompe à vide (non représentée) et est configuré pour produire une dépression dans l'espace 14 entre le support inférieur 11 et le support supérieur 12.

Le dispositif de gainage 10 comprend un conformateur 16 disposé sur le support supérieur 12. Des espaceurs 17 sont disposés entre le support supérieur 12 et le conformateur 16 de façon à constituer un espace 18 entre le support supérieur 12 et le conformateur 16. Un deuxième mécanisme d'aspiration 19, de type Venturi, à très fort débit, est raccordé à l'espace 18 entre le support supérieur 12 et le conformateur 16.

Le conformateur 16 comporte des reliefs 20 sur sa surface supérieure 21. De tels reliefs 20 ont pour but de conférer la forme souhaitée à la structure de bagage obtenue après mise en forme. Il convient de noter que les reliefs représentés sur les Figures 2-3 le sont à titre purement illustratif et que toute forme bien connue de l'homme du métier, et tout nombre de reliefs, sont envisagés dans le cadre de la présente invention. Par exemple, le conformateur 16 pourra présenter des renfoncements et des saillies sous forme entre autres de marches, de creux, de pentes comme couramment rencontrés dans le domaine de la mise en forme tridimensionnelle par presse.

Le conformateur 16 comporte en outre des renfoncements 22 au niveau de sa base 23 et dont le rôle sera explicité plus loin. Le conformateur 16 pourra également comporter des trous sur sa surface pour faciliter le passage d'air de part et d'autre de sa surface.

Le dispositif de gainage 10 comporte également un cadre 24, disposé autour du conformateur 16 et relié au support inférieur 11. Le cadre 24 est configuré pour maintenir une membrane 25. La membrane 25 s'étend au-dessus du conformateur 16. Le cadre 24 est disposé par des moyens adéquats (par exemple fixations amovibles) sur le support 11 et de manière étanche, encadrera de préférence la totalité du conformateur 16, pour maintenir la membrane 25 sur toute sa périphérie pour assurer une pression uniforme de celle-ci.

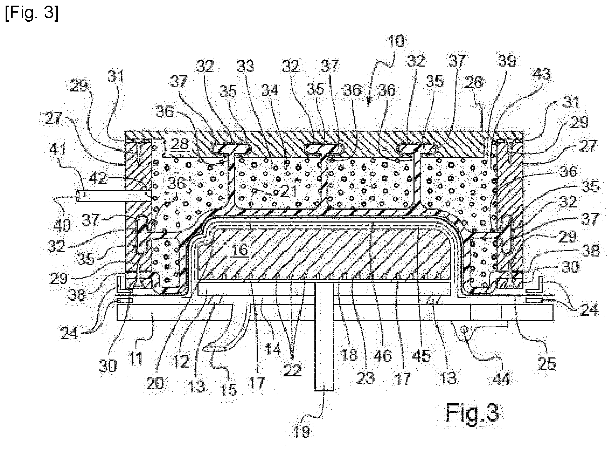

Le dispositif de gainage 10 comporte en outre un caisson 26. Le caisson 26 est disposé au-dessus de la membrane 25 et du conformateur 16. Le caisson 26 est mobile par rapport à l'ensemble membrane 25-conformateur 16 depuis une première position à distance du conformateur 16, comme on peut le voir sur la Figure 2, vers une seconde position à proximité du conformateur 16, comme on peut le voir sur la Figure 3. Des moyens de verrouillage (non représentés) sont prévus pour verrouiller le caisson 26 en première ou deuxième position.

Le caisson 26 comporte des montants verticaux 27 reliés à une partie supérieure horizontale 28. Sur les Figures 2-3, on peut voir que les montants 27 sont reliés à la partie supérieure 28 par l'intermédiaire de moyens de fixation 29 de type vis.

Le caisson 26 comporte également une partie inférieure 30 reliée aux montants 27 par l'intermédiaire de moyens de fixation 29 de type vis.

Il convient de noter que les moyens de fixation 29 représentés sur les Figure 2-3 sont à titre purement illustratif et que tous moyens de fixation bien connus de l'homme du métier pourront être envisagés sans s'écarter du cadre de la présente invention.

Entre les montants 27 et la partie supérieure 28, le caisson 26 comporte des moyens d'étanchéité 31. Par exemple, les moyens d'étanchéité 31 sont des joints toriques.

Le caisson 26 comporte, sur le côté intérieur des montants 27 et de la partie supérieure 28, des logements 32 dont le rôle sera explicité ci-après.

Le caisson 26 est également équipé d'une baudruche 33. La baudruche 33, creuse, est réalisée sous forme de peau moulée en un matériau élastomère. Par ailleurs, la baudruche 33 présente une inertie thermique adaptée à la conduction de chaleur.

La baudruche 33 comporte une partie principale 34 disposée à l'intérieur du caisson 26, en regard de la membrane 25.

La baudruche 33 comporte également des éléments de maintien 35, venus de moule avec la partie principale 34. Les éléments de maintien 35 font saillie depuis la partie principale 34 en direction des montants 27 et de la partie supérieure 28 et sont configurés pour être reçus dans les logements 32 des montants 27 et de la partie supérieure 28. Sur les Figures 2-3, on peut voir que les éléments de maintien 35 présentent en coupe transversale une forme de T et comprennent un tronc 36 s'étendant perpendiculairement depuis la partie principale 34 et se terminant par une traverse 37. La traverse est insérée dans le logement 32. Le logement 32 est ainsi dimensionné pour maintenir la traverse 37 en position dans celui-ci.

Les extrémités 38 de la partie principale 34 sont reçues entre les montants 27 et la partie inférieure 30 du caisson 26 et forment à ce niveau une liaison étanche.

Ainsi, les montants 27 et la partie supérieure 28 du caisson 26 forment avec la baudruche 33 un espace 39 entre ceux-ci. Cet espace 39 est isolé de l'extérieur de façon étanche par les moyens d'étanchéité 31 et les extrémités 38 de la partie principale 34 de la baudruche 33.

Le dispositif de gainage 10 comporte un système d'injection de fluide 40. Un tel système d'injection de fluide 40 est bien connu de l'homme du métier et peut comporter, entre autres, un fluide, un réservoir de fluide (non représentés), des moyens de pompage (non représentés), un circuit de fluide 41, et des moyens de régulation de température de fluide (non représentés).

Le circuit de fluide 41 est raccordé au caisson 26 par l'intermédiaire d'une entrée 42 et d'une sortie (non représentée).

Le système d'injection de fluide 40 est configuré pour faire circuler un fluide sous pression 43 entre le caisson 26 et la baudruche 33. Les moyens de régulation de température de fluide sont configurés pour faire varier la température du fluide 43.

Le fluide sous pression 43, activé lorsque le caisson 26 est en position basse sur le conformateur 16, exerce une pression sur la baudruche 33, ce qui amène la baudruche 33 à se déformer pour plaquer la baudruche 33 contre la membrane 25 et le conformateur 16. Ainsi, la baudruche 33 épouse parfaitement les contours et les détails du conformateur 16 et de la structure 45, et plus particulièrement des reliefs 20, ce qui permet d'obtenir une structure de bagage parfaitement conformée sur le conformateur 16.

Les éléments de maintien 35 permettent alors de solidariser la baudruche 33 au caisson 26 et d'éviter que la masse du fluide circulant en permanence dans le caisson 26 ne déforme la peau extérieure de la baudruche 33.

Le fluide chaud sous pression 43 va agir sur la surface préalablement encollée par un adhésif thermoréactivable et/ou thermoréticulable de la structure creuse pour solidariser parfaitement la structure creuse 45 et l'enveloppe 46. On fait facultativement si nécessaire suivre l'injection de fluide chaud 43 par une injection de fluide froid 43 après le temps nécessaire au collage de l'enveloppe 46 sur la structure creuse 45 par l'adhésif, pour fixer l'ensemble composite formé puis permettre son démoulage du conformateur 16.

Le fluide 43 est l'un choisi parmi l'eau et une huile.

Le dispositif de gainage 10 comporte un clapet de décharge 44 au niveau du support inférieur 11. Le clapet de décharge 44 est raccordé avec l'espace 14 entre le support inférieur 11 et le support supérieur 12. Le clapet de décharge 44 est configuré pour remettre en pression l'espace 14 mis en dépression par les moyens d'aspiration 15.

Nous allons ci-après décrire le fonctionnement du dispositif de gainage 10. Une structure creuse 45, dans l'exemple non limitatif représenté, un bagage, à gainer est disposée sur le conformateur 16. Le conformateur 16 est dimensionné pour que la structure de bagage 45 recouvre partiellement, mais pas totalement les renfoncements 22 présents à la base 23 du conformateur 16. La face de la structure creuse 45 est préalablement encollée par un adhésif thermoréactivable et/ou thermoréticulable. Une enveloppe confectionnée 46 est disposée au-dessus la structure de bagage 45, l'enveloppe 46 s'étendant au-delà de la structure de bagage 45 et de l'espace 18 entre le support supérieur 12 et le conformateur 16. Une aspiration est faite par le canal 19 pour extraire l'air résiduel entre l'enveloppe 46 et la structure 45 de sorte à éviter les bulles. La membrane 25 est disposée au-dessus de l'enveloppe 46 et est maintenue dans le cadre 24 fermé. Une aspiration est réalisée par l'intermédiaire du premier mécanisme d'aspiration 15 dans l'espace 14 entre le support inférieur 11 et le support supérieur 12 de façon à appliquer la membrane 25 sur l'ensemble enveloppe 46-structure de bagage 45-conformateur 16. L'aspiration via la canal 19 est coupée. Le caisson 26 est descendu, de la première position à distance du conformateur 16 comme on peut le voir sur la Figure 2, et rapproché vers la seconde position à proximité du conformateur 16 comme on peut le voir sur la Figure 3. Le caisson 26 est alors verrouillé en position par l'intermédiaire des moyens de verrouillage. Le système d'injection étanche de fluide 40 est actionné pour faire circuler un fluide sous pression 43 entre le caisson 26 et la baudruche 33. Comme mentionné précédemment, le fluide sous pression 43 exerce une pression sur la baudruche 33 ce qui amène la baudruche 33 à se déformer pour plaquer la baudruche 33 contre la membrane 25, et donc l'enveloppe 46 et la structure de bagage 45 contre le conformateur 16. La pression exercée (supérieure à 1 bar/cm²) permet de dépasser les contraintes élastiques des matériaux constituant l'enveloppe 46. Ainsi, la baudruche 33 et donc l'enveloppe 46 et la structure de bagage 45 épousent parfaitement les contours du conformateur 16, et plus particulièrement des reliefs 20, ce qui permet d'obtenir un ensemble enveloppe 46-structure de bagage 45 parfaitement conformé sur le conformateur 16. Les moyens de régulation de température de fluide chauffent le fluide 43. Comme mentionné précédemment, la baudruche 33 présente une inertie thermique adaptée à la conduction de chaleur de telle sorte que les calories apportées par le fluide 43 sont transmises à la baudruche 33 qui les transmet à l'enveloppe 46 et à la structure de bagage 45. Les calories ainsi apportées déclenchent la réticulation ou la thermoréactivation de l'adhésif et donc l'adhésion de l'enveloppe 46 à la structure de bagage 45. L'homme du métier saura ajuster la température du fluide 43 en fonction des matériaux employés pour l'enveloppe 46, l'adhésif et du type de fluide 43.

Le premier mécanisme d'aspiration 15 est arrêté et le fluide 43 est maintenu sous pression et en température pendant un temps déterminé. De préférence, cette étape dure une minute. Toutefois, l'homme du métier saura ajuster la durée. Puis facultativement, les moyens de régulation de température de fluide abaissent la température du fluide 43. Le fluide 43 est maintenu sous pression et en température abaissée pendant un temps déterminé. De préférence, cette étape dure également une minute. Toutefois, l'homme du métier saura également ajuster la durée. L'aspiration via le canal 15 est remise, maintenant en position l'ensemble structure 45-enveloppe 46. La pression du fluide 43 est diminuée. Les moyens de verrouillage sont déverrouillés et le caisson 26 est relevé, le cadre 24 est ouvert après coupure de l'aspiration du canal 15 de façon à extraire l'ensemble cohérent enveloppe 46-structure de bagage 45 conformé.

Selon un mode de réalisation, le deuxième mécanisme d'aspiration de type Venturi 19 réalise une aspiration de type Venturi au niveau l'espace 18 entre le support supérieur 12 et le conformateur 16. Du fait que l'enveloppe 46 s'étend au-delà de la structure de bagage 45, l'interface entre l'enveloppe 46 et la structure de bagage 45 est en communication avec l'espace 18 entre le support supérieur 12 et le conformateur 16. Ainsi, l'air présent est aspiré par les moyens d'aspiration de type Venturi 19 de façon à appliquer l'enveloppe 46 sur la structure de bagage 45. En outre, du fait de la présence des renfoncements 22, le flux d'air n'est pas obstrué, ce qui permet une aspiration complète. De tels moyens 19 sont particulièrement avantageux pour empêcher la formation de bulles d'air entre l'enveloppe 46 et la structure de bagage 45 et ainsi conduire à un plaquage parfait, exempt de défauts. Cette étape est initiée avant la fermeture du cadre 24 et arrêtée avant la descente du caisson 26.

Comme mentionné précédemment, le clapet de décharge 44 permet une remise en pression de l'espace 14 mis en dépression par le premier mécanisme d'aspiration 15. Ceci peut être réalisé à tout moment, en particulier, cette remise en pression peut être réalisée avant la descente du caisson 26 afin de vérifier le bon positionnement de l'enveloppe 46.

La structure de bagage 45 pourra être encollée dans une étape préalable. Une fois la pièce conformée obtenue, l'excédent d'enveloppe 46 de l'ensemble cohérent enveloppe 46-structure de bagage 45 est retiré lors d'une étape ultérieure de découpe et/ou rembordement.

## Revendications

1. - Dispositif de gainage (10) d'une enveloppe (46) sur une face dite de gainage d'une structure creuse (45), le dispositif de gainage (10) comprenant :
un conformateur (16) ayant une face externe configurée pour épouser tout ou partie de la forme de la face de la structure creuse (45) opposée à la face de gainage et une face interne, la surface du conformateur (16) étant configurée pour permettre une circulation d'air entre ses faces externe et interne ;
un premier mécanisme d'aspiration (15) pour aspirer de l'air depuis la face interne du conformateur (16) ; et
un cadre (24) entourant au moins partiellement le conformateur (16) et configuré pour maintenir une membrane élastique (25) sur la face externe du conformateur (16) afin, en utilisation, de prendre en sandwich entre la face externe du conformateur (16) et la membrane élastique (25) la structure creuse (45) et l'enveloppe (46) et en figer la position,
**caractérisé par le fait que** le dispositif de gainage (10) comprend en outre :
un caisson (26) portant une baudruche (33) étanche disposée en regard du conformateur (16),
un système d'injection étanche (40) de fluide sous pression et thermorégulé (43) entre le caisson (26) et la baudruche (33),
le caisson (26) étant mobile entre une position écartée du conformateur (16) permettant d'installer la structure creuse (45), l'enveloppe (46) et la membrane élastique (25) sur le conformateur (16) et une position de travail dans laquelle la baudruche (33), sous l'effet du fluide sous pression (43), épouse la forme de la face externe du conformateur (16) et de la structure (45) dans ses différents détails de géométrie et applique une pression sur la surface de la membrane élastique (25) pour plaquer l'enveloppe (46) sur la face de gainage de la structure creuse (45) et en figer la position.

2. - Dispositif de gainage (10) selon la revendication 1, **caractérisé par le fait qu'**il comprend un second mécanisme d'aspiration.

3. - Dispositif de gainage (10) selon la revendication 1 ou la revendication 2, **caractérisé par le fait que** le fluide (43) est de l'eau ou une huile.

4. - Dispositif de gainage (10) selon l'une des revendications 1 à 3, **caractérisé par le fait que** la baudruche (33) est réalisée en un matériau de type élastomère dont le coefficient de Poisson est au moins égal à 0,5.

5. - Dispositif de gainage (10) selon l'une des revendications 1 à 4, **caractérisé par le fait qu'**au moins l'un parmi des trous et des rainures sont formés sur la surface du conformateur (16).

6. - Dispositif de gainage (10) selon l'une des revendications 1 à 5, **caractérisé par le fait que** des saillies sont formées d'un seul tenant sur la surface de la baudruche (33) destinée à être en contact avec le caisson (26), lesdites saillies étant configurées pour être insérées dans le caisson (26) et étant aptes à maintenir la baudruche (33) attachée au caisson (26).

7. - Dispositif de gainage (10) selon l'une des revendications 1 à 6, **caractérisé par le fait qu'**il comprend un clapet de décharge permettant de couper la mise en dépression de la membrane (25).

8. - Procédé de gainage utilisant un dispositif de gainage selon l'une des revendications 2 à 7, **caractérisé par le fait que** le procédé comprend les étapes suivantes consistant à :
disposer une structure creuse (45) à gainer sur la face externe du conformateur (16), la face de gainage de la structure creuse ayant été préalablement enduite d'au moins l'un d'un adhésif thermoréactivable et d'un adhésif thermo-réticulable ;
disposer une enveloppe confectionnée (46) sur la structure creuse (45), l'enveloppe (46) s'étendant au-delà de la structure creuse (45) ;
réaliser une première aspiration entre l'enveloppe (46) et la structure (45) de sorte à parfaire le positionnement de l'enveloppe (46) sur la structure (45) par le premier mécanisme d'aspiration
disposer une membrane élastique (25) au-dessus de l'enveloppe (46), la membrane (25) étant maintenue par le cadre (24) ;
réaliser une aspiration par le deuxième mécanisme d'aspiration de façon à appliquer la membrane (25) sur l'enveloppe (46), la structure creuse (45) et le conformateur (16) ;
abaisser le caisson (26) en direction du conformateur (16) ;
verrouiller le caisson (26) en position sur le conformateur (16) ;
injecter un fluide sous pression (43) et thermorégulé entre le caisson (26) et la baudruche (33) ;
arrêter l'aspiration et remettre en pression ;
maintenir l'injection de fluide (43) sous pression ;
injecter un fluide (43) sous pression refroidi ;
maintenir l'injection de fluide (43) sous pression refroidi ;
diminuer l'injection de fluide (43) sous pression refroidi ;
remettre l'aspiration du deuxième mécanisme d'aspiration ;
déverrouiller le caisson (26) ;
relever le caisson (26) ;
couper l'aspiration et relever le cadre comportant la membrane ; et
extraire l'ensemble enveloppe (46)-structure creuse (45) conformé.

9. - Procédé de gainage selon la revendication 8 prise en dépendance de la revendication 2, **caractérisé par le fait qu'**il comprend en outre, avant l'abaissement du caisson (26), une étape consistant à réaliser une aspiration par le deuxième mécanisme d'aspiration de façon à appliquer l'enveloppe (46) sur la structure creuse (45).

10. - Procédé de mise en forme selon l'une des revendications 8 et 9, **caractérisé par le fait que** l'excédent d'enveloppe (46) de l'ensemble enveloppe (46)-structure creuse (45) conformé est retiré lors d'une étape ultérieure de découpe et/ou rembordement.

## Patentansprüche

1. Vorrichtung zur Ummantelung (10) einer Hülle (46) auf einer Seite, bezeichnet als Ummantelungsseite, einer Hohlstruktur (45), wobei die Vorrichtung zur Ummantelung (10) Folgendes umfasst:
einen Former (16) mit einer äußeren Seite, die konfiguriert ist, um sich an die Gesamtheit oder einen Teil der Form der Seite der Hohlstruktur (45) gegenüber der Ummantelungsseite und einer inneren Seite anzupassen, wobei die Fläche der Formers (16) konfiguriert ist, um eine Luftzirkulation zwischen seiner äußeren und inneren Seite zu ermöglichen;
einen ersten Saugmechanismus (15), um Luft von der inneren Seite der Formers (16) anzusaugen; und
einen Rahmen (24), der mindestens teilweise den Former (16) umgibt und konfiguriert ist, um eine elastische Membran (25) auf der äußeren Seite des Formers (16) beizubehalten, um, bei der Verwendung, die Hohlstruktur (45) und die Hülle (46) zwischen der äußeren Seite des Formers (16) und der elastischen Membran (25) einzufügen und die Position davon fest werden zu lassen,
**dadurch gekennzeichnet, dass** die Vorrichtung zur Ummantelung (10) außerdem Folgendes umfasst:
einen Kasten (26), der eine dichte Haut (33) trägt, der gegenüber dem Former (16) angeordnet ist,
ein System zur dichten Injektion (40) von Fluid unter Druck und thermoreguliert (43) zwischen dem Kasten (26) und der Haut (33),
wobei der Kasten (26) zwischen einer vom Former (16) entfernten Position, die ermöglicht, die Hohlstruktur (45), die Hülle (46) und die elastische Membran (25) auf dem Former (16) zu installieren, und einer Arbeitsposition ist, in der sich die Haut (33) unter der Einwirkung des Fluids (43) unter Druck an die Form der äußeren Seite des Formers (16) und der Struktur (45) in seinen verschiedenen geometrischen Details anpasst, beweglich ist und einen Druck auf die Fläche der elastischen Membran (25) anwendet, um die Hülle (46) auf die Seite der Ummantelung der Hohlstruktur (45) zu drücken und davon die Position fest werden zu lassen.

2. Vorrichtung zur Ummantelung (10) nach Anspruch 1, **dadurch gekennzeichnet, dass** sie einen zweiten Saugmechanismus umfasst.

3. Vorrichtung zur Ummantelung (10) nach Anspruch 1 oder Anspruch 2, **dadurch gekennzeichnet, dass** das Fluid (43) Wasser oder ein Öl ist.

4. Vorrichtung zur Ummantelung (10) nach einem der Ansprüche 1 bis 3, **dadurch gekennzeichnet, dass** die Haut (33) aus einem Material vom Typ Elastomer hergestellt ist, dessen Poissonzahl mindestens gleich 0,5 ist.

5. Vorrichtung zur Ummantelung (10) nach einem der Ansprüche 1 bis 4, **dadurch gekennzeichnet, dass** mindestens eines unter Löchern und Nuten auf der Fläche des Formers (16) gebildet ist.

6. Vorrichtung zur Ummantelung (10) nach einem der Ansprüche 1 bis 5, **dadurch gekennzeichnet, dass** Vorsprünge einstückig auf der Fläche der Haut (33) gebildet sind, ausgelegt, um mit dem Kasten (26) in Kontakt zu sein, wobei die Vorsprünge konfiguriert sind, um in den Kasten (26) eingeführt zu sein, und ausgelegt sind, um die Haut (33) an den Kasten (26) befestigt zu halten.

7. Vorrichtung zur Ummantelung (10) nach einem der Ansprüche 1 bis 6, **dadurch gekennzeichnet, dass** sie eine Entladungsklappe umfasst, die ermöglicht, die Erzeugung eines Unterdrucks der Membran (25) zu unterbrechen.

8. Verfahren zur Ummantelung unter Verwendung einer Vorrichtung zur Ummantelung nach einem der Ansprüche 2 bis 7, **dadurch gekennzeichnet, dass** das Verfahren die Folgenden Schritte umfasst, die bestehen aus:
Anordnen einer Hohlstruktur (45), die ummantelt werden soll, auf der äußeren Seite des Formers (16), wobei die Ummantelungsseite der Hohlstruktur im Voraus mit mindestens einem wärmeaktivierbaren Klebstoff und einem thermisch vernetzbaren Klebstoff beschichtet wurde;
Anordnen einer angefertigten Hülle (46) auf der Hohlstruktur (45),wobei sich die Hülle (46) über die Hohlstruktur (45) hinaus erstreckt;
Durchführen eines ersten Ansaugens zwischen der Hülle (46) und der Struktur (45), um die Positionierung der Hülle (46) auf der Struktur (45) durch den ersten Saugmechanismus zu vervollständigen,
Anordnen einer elastischen Membran (25) über der Hülle (46), wobei die Membran (25) durch den Rahmen (24) gehalten wird;
Durchführen eines Ansaugens durch den zweiten Ansaugmechanismus, um die Membran (25) auf der Hülle (46), der Hohlstruktur (45) und dem Former (16) anzubringen;
Absenken des Kastens (26) in Richtung des Formers (16);
Verriegeln des Kastens (26) in ihrer Position auf dem Former (16);
Injizieren eines Fluids unter Druck (43) und thermoreguliert zwischen dem Kasten (26) und die Haut (33);
Beenden des Ansaugens und erneutes Unter-Druck-Setzen;
Beibehalten des Drucks des Injektionsfluids (43);
Injizieren eines abgekühlten Fluids (43) unter Druck;
Halten des Injektion von abgekühltem Fluid (43) unter Druck;
Verringern des Injektion von abgekühltem Fluid (43) unter Druck;
erneutes Ansaugen des zweiten Saugmechanismus;
Entriegeln des Kastens (26);
Anheben des Kastens (26);
Unterbrechen des Ansaugens und Anheben des Rahmens, der die Membran umfasst; und
Extrahieren der geformten Einheit Hülle (46)-Hohlstruktur (45).

9. Verfahren zur Ummantelung nach Anspruch 8 in Abhängigkeit von Anspruch 2, **dadurch gekennzeichnet, dass** es außerdem, vor dem Absenken des Kastens (26), einen Schritt des Durchführens eines Ansaugens durch den zweiten Saugmechanismus umfasst, um die Umhüllung (46) auf die Hohlstruktur (45) anzubringen.

10. Verfahren zur Formung nach einem der Ansprüche 8 und 9, **dadurch gekennzeichnet, dass** der Überstand der Hülle (46) der geformten Einheit Hülle (46) - Hohlstruktur (45) bei einem letzten Schritt des Schneidens und/oder des Umbugens zurückgezogen wird.

## Claims

1. - Device (10) for sheathing a shell (46) on a so-called sheathing face of a hollow structure (45), the sheathing device (10) comprising :
a former (16) having an outer face configured to conform all or part of the shape of the face of the hollow structure (45) opposite the sheathing face and an inner face, the surface of the former (16) being configured to allow air flow between the outer and inner faces thereof;
a first suction mechanism (15) for drawing air from the inner face of the former (16); and
a frame (24) at least partially surrounding the former (16) and configured to hold a resilient membrane (25) on the outer face of the former (16) so as, in use, to sandwich the hollow structure (45) and the shell (46) between the outer face of the former (16) and the resilient membrane (25) and to fix the position thereof,
**characterized in that** the sheathing device (10) further comprises :
a casing (26) carrying a fluid-tight bladder (33) arranged opposite the former (16),
a fluid-tight system (40) for injecting pressurized and thermoregulated fluid (43) between the casing (26) and the bladder (33),
wherein the casing (26) is movable between a position spaced from the former (16) allowing the hollow structure (45), the shell (46) and the resilient membrane (25) to be installed on the former (16), and a working position in which the bladder (33), under the effect of the pressurized fluid (43), conforms to the shape of the outer face of the former (16) and the structure (45) in its various geometric details and applies pressure to the surface of the resilient membrane (25) to press the shell (46) against the sheathing face of the hollow structure (45) and fix the position thereof.

2. - A sheathing device (10) according to claim 1, **characterized in that** it comprises a second suction mechanism.

3. - A sheathing device (10) according to claim 1 or claim 2, **characterized in that** the fluid (43) is water or oil.

4. - A sheathing device (10) according to any one of claims 1 to 3, **characterized in that** the bladder (33) is made of an elastomer-type material whose Poisson's ratio is at least equal to 0.5.

5. - A sheathing device (10) according to any one of claims 1 to 4, **characterized in that** at least one of the holes and the grooves are formed on the surface of the former (16).

6. - A sheathing device (10) according to any one of claims 1 to 5, **characterized in that** projections are integrally formed on the surface of the bladder (33) to be in contact with the casing (26), said projections being configured to be inserted into the casing (26) and being capable of holding the bladder (33) attached to the casing (26) .

7. - A sheathing device (10) according to any one of claims 1 to 6, **characterized in that** it comprises a dump valve allowing to cut off the vacuum of the membrane (25).

8. - A sheathing method using a sheathing device according to any one of claims 2 to 7, **characterized in that** the method comprises the following steps:
arranging a hollow structure (45) to be sheathed on the outer face of the former (16), the sheathing face of the hollow structure having been previously coated with at least one of a heat-reactivatable adhesive and a heat-crosslinkable adhesive;
disposing a fabricated shell (46) on the hollow structure (45), the shell (46) extending beyond the hollow structure (45);
performing a first suction between the shell (46) and the structure (45) in order to perfect the positioning of the shell (46) on the structure (45) by the first suction mechanism;
arranging a resilient membrane (25) over the shell (46), the membrane (25) being held by the frame (24);
performing a suction by the second suction mechanism so as to apply the membrane (25) on the shell (46), the hollow structure (45) and the former (16);
lowering the casing (26) towards the former (16);
locking the casing (26) in position on the former (16) ;
injecting a pressurized and thermoregulated fluid (43) between the casing (26) and the bladder (33);
stopping the suction and pressurize;
maintaining the injection of pressurized fluid (43);
injecting a cooled pressurized fluid (43);
maintaining the injection of cooled pressurized fluid (43) ;
decreasing the injection of cooled pressurized fluid (43) ;
resetting the suction of the second suction mechanism;
unlocking the casing (26);
raising the casing (26);
stopping the suction and raising the frame with the membrane; and
extracting the shaped shell (46)/hollow structure (45) assembly.

9. - A sheathing method according to claim 8 dependent on claim 2, **characterized in that** it further comprises, before lowering the casing (26), a step consisting in performing a suction by the second suction mechanism so as to apply the shell (46) on the hollow structure (45).

10. - A Shaping method according to any one of claims 8 and 9, **characterized in that** the excess shell (46) of the shaped shell (46)/hollow structure (45) assembly is removed during a subsequent cutting and/or padding step.
